# EUROPEAN PATENT APPLICATION

(11) **EP 1 633 099 A1**
(43) Date of publication of application: **08.03.2006**
(21) Application number: 04736458.3
(22) Date of filing: 09.06.2004
(51) Int. Cl.: H04L 29/02

(54) **PACKET COMMUNICATION DEVICE**

(30) Priority: 09.06.2003 JP 2003163214
(71) Applicant: MATSUSHITA ELECTRIC INDUSTRIAL CO., LTD., Kadoma-shi, Osaka 571-8501 (JP)
(72) Inventor: ISHIMORI, Takayuki, Yokohama-shi, Kanagawa 233-0002 (JP); HIGUCHI, Shinichi, Kanagawa 226-0015 (JP); IIDA, Kenichiro, Yokohama-shi, Kanagawa 244-0804 (JP)
(74) Representative: Grünecker, Kinkeldey, Stockmair & Schwanhäusser Anwaltssozietät
(86) International application number: PCT/JP2004/008365
(87) International publication number: WO 2004/110013

(57) **Abstract**

Mobile terminal 100 has: operator 251 that calculates the generation interval of ACK packets based on the size of the ACK packet that is to be transmitted and the channel rate of the transmitting channel, held in controller 250; delay ACK timer 223 that repeats counting the calculated ACK packet generation interval as one period and outputs an expiration signal every time the one period expires; and data packet receiver 221 that, every time the expiration signal is input, generates an ACK packet containing the latest reception confirmation information relating to data packets received while the expiration signal was being received, and transmits the ACK packet to transmission buffer 240 via IP section 210.

## Description

### Technical Field

The present invention relates to a packet communication apparatus connected to asymmetrical packet communication channels adopting TCP (Transmission Control Protocol).

### Background Art

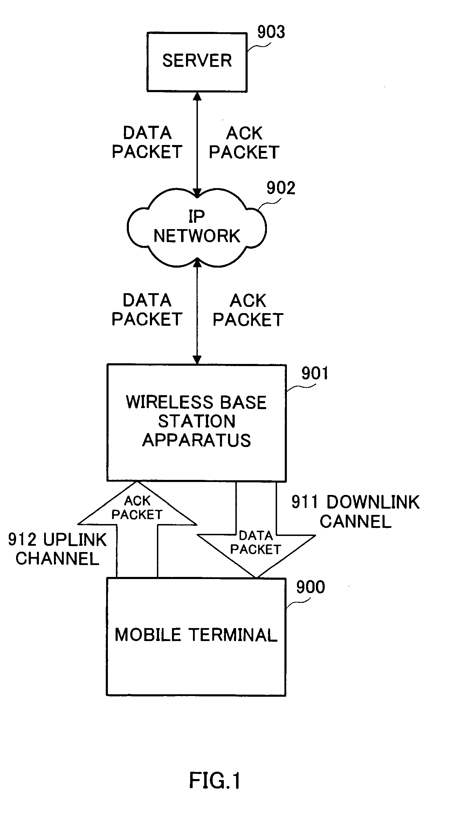

A case will be described here where a conventional method of packet communication in which asymmetrical communication channels adopt TCP is implemented in a mobile communication system. FIG.1 is a block diagram showing the configuration of the mobile communication system.

In this mobile communication system, as shown in FIG.1, mobile terminal 900 is connected, via wireless base station apparatus 901, to network (i.e. IP network) 902 that transports packets using the Internet protocol (IP) . Server 903 is present on network (IP network) 902 and performs packet communication with mobile terminal 900 applying TCP to the asymmetrical communication channels.

That is, mobile terminal 900 receives a data packet that server 903 transmits to IP network 902 via wireless base station apparatus 901, and returns an ACK packet to server 903 via IP network 902 via wireless base station apparatus 901. However, downlink channel 911, through whichmobile terminal 900 receives the data packet, has greater channel speed than uplink channel 912, through which mobile terminal 900 returns the ACK packet.

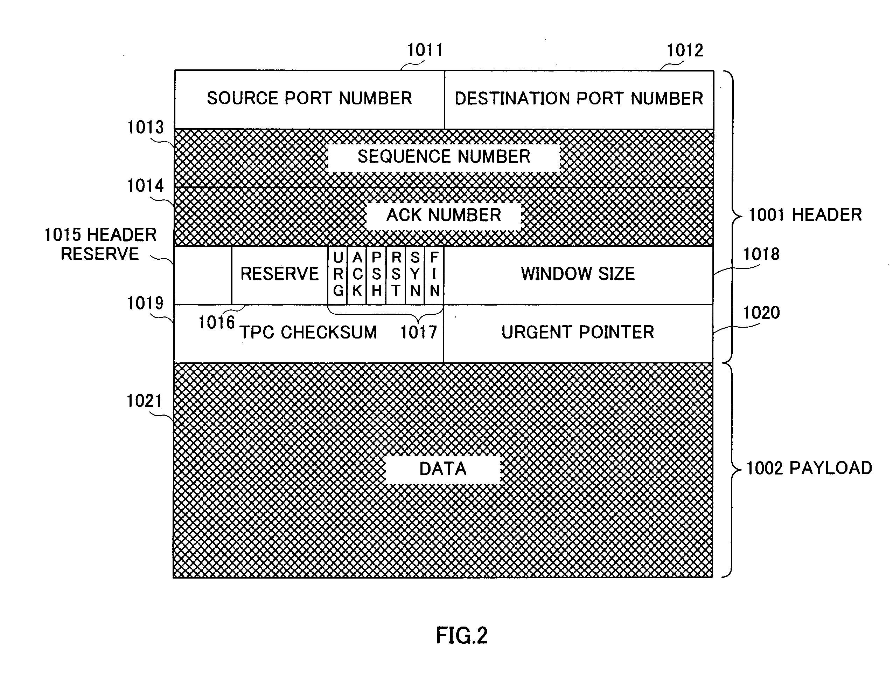

FIG.2 shows the TCP packet format. As shown in FIG.2, a TCPpacket is formed with header 1001 and pay load 1002. Header 1001 includes: source port number field 1011; destination port number field 1012; sequence number field 1013; ACK number field 1014; header reserve field 1015; reserve field 1016; control flag field 1017; window size field 1018; TCP checksum field 1019; and urgent pointer field 1020. Payload 1002 includes data field 1021.

The following explanation chiefly concerns sequence number field 1013, ACK number field 1014, and window size field 1018. Sequence number field 1013 includes a sequence number SN, which indicates the position of the first data included in a data packet in the entire data stream.

The ACK flag in control flag field 1017 indicates that ACK number field 1014 includes an ACK number AN. ACK number field 1014 is effective only when this ACK flag is present.

To indicate to server 903 of the source that the data packet has been received correctly, the ACK number AN set in ACK number field 1014 is the sequence number SN of the data packet that mobile terminal 900 of the receiving side expects to receive next. That is, given the data packet having the newest sequence number SN among the receiving data packets forming a continuous data stream, the payload size of this data packet is added to the sequence number SN, and the ACK number AN indicates the resulting value. Incidentally, the payload size of the data packet is the size of data field 1021.

Window size field 1018 is used when server 903 of the source executes window control. That is, when mobile terminal 900 of the receiving side returns an ACK packet, a value indicating the extent to which mobile terminal 900 is capable of receiving the data packet starting with the ACK number AN is set in window size field 1018 and reported to server 903.

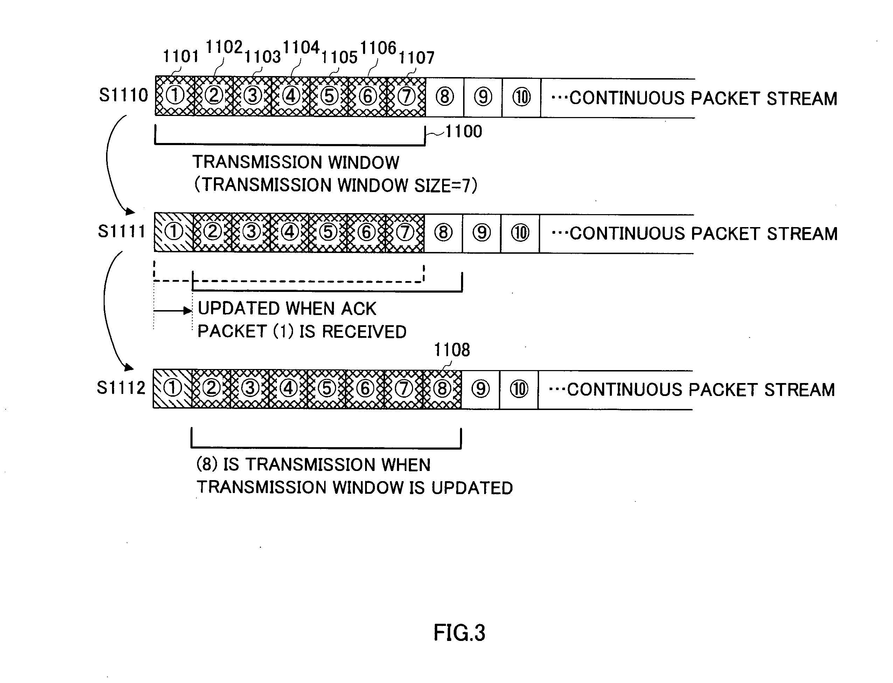

FIG. 3 illustrates window control by server 903. In FIG. 3, in step S1110, server 903 sets a transmission window size of 7 as transmission window size 1100, and transmits data packet 1101 through data packet 1107 in accordance with this transmission widow size 1100, sequentially. Incidentally, in FIG.3, the hatched portion represents data packets that have been transmitted yet have not been confirmed receipt. The white portion represents data packets that have not been transmitted. The slash part represents data packets that have been confirmed receipt.

In next step S1111, server 903 receives the ACK packet and thereby confirms that mobile terminal 900 has received data packet 1101. Server 903 acquires the starting number and the number of data packets mobile terminal 900 is capable of receiving from the ACK number AN and the window size of the ACK packet received from mobile terminal 900 and updates the transmission window in proportion to this number of data packets.

In next step S1112, server 903 transmits data packet 1108 which is now in the transmission window by virtue of the updating.

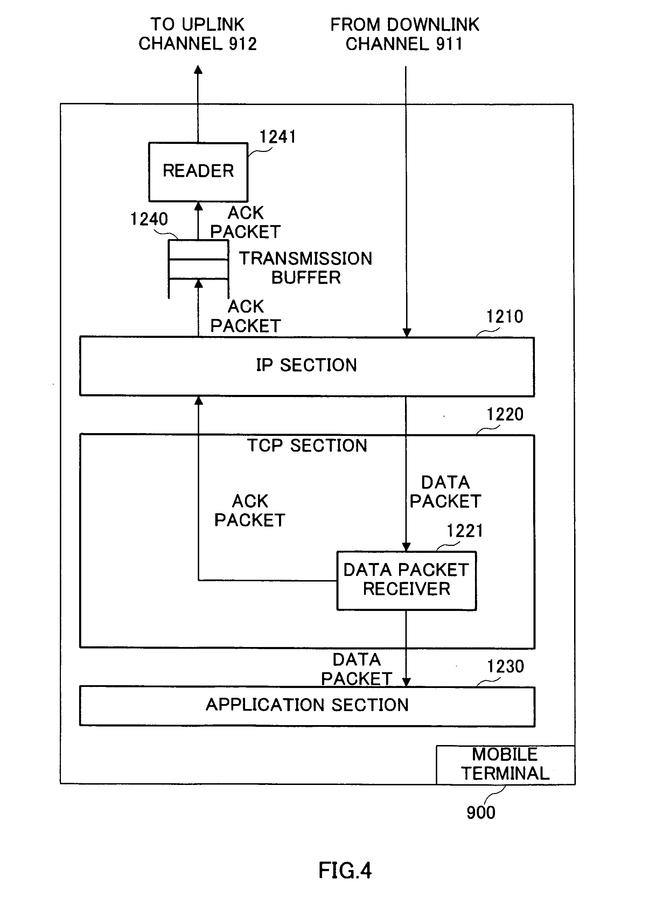

Now, FIG.4 is a block diagram showing a configuration where mobile terminal 900 shown in FIG.1 performs conventional packet communication applying TCP to asymmetrical communication channels. As shown in FIG.4, mobile terminal 900 shown in FIG.1 has IP section 1210, TCP section 1220, application section 1230, transmission buffer 1240 and reader 1241. TCP section 1220 has data packet receiver 1221.

IP section 1210 applies IP processing to the IP packet received via downlink channel 911 and sends the result to data packet receiver 1221. In addition, IP section 1210 attaches an IP header to the ACK packet received from data packet receiver 1221 and sends the result to transmission buffer 1240.

Data packet receiver 1221 applies TCP processing to the data packet received from IP section 1210 and sends the result to application section 1230, and, every time receiving a data packet, indicates an ACK flag and generates an ACK packet in which the ACK number AN and the window size are set, and sends the ACK packet to IP section 1210. The following explanation assumes that, with an ACK packet, there is a specification in window size field 1018 that server 903 receiving an ACK packet update the transmission window by the update of the ACK number AN, and consequently the ACK number AN alone will be concerned.

Application section 1230 refers to an application layer for processing user packets.

Transmission buffer 1240 accumulates the ACK packets received from IP section 1210. Reader 1241 reads the ACK packets from transmission buffer 1240 according to the channel rate of uplink channel 912 and sends the ACK packets to uplink channel 912.

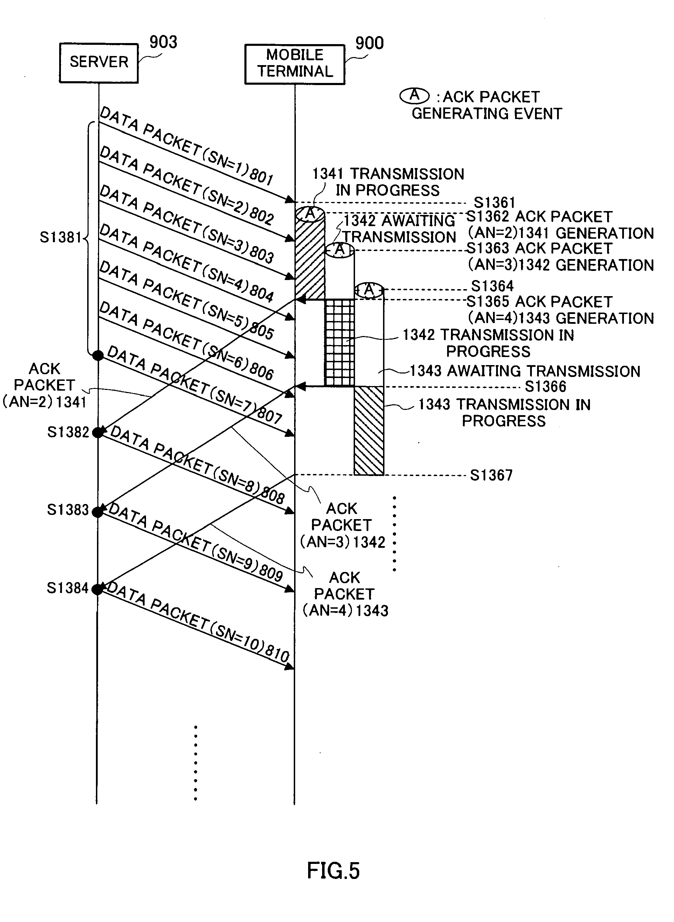

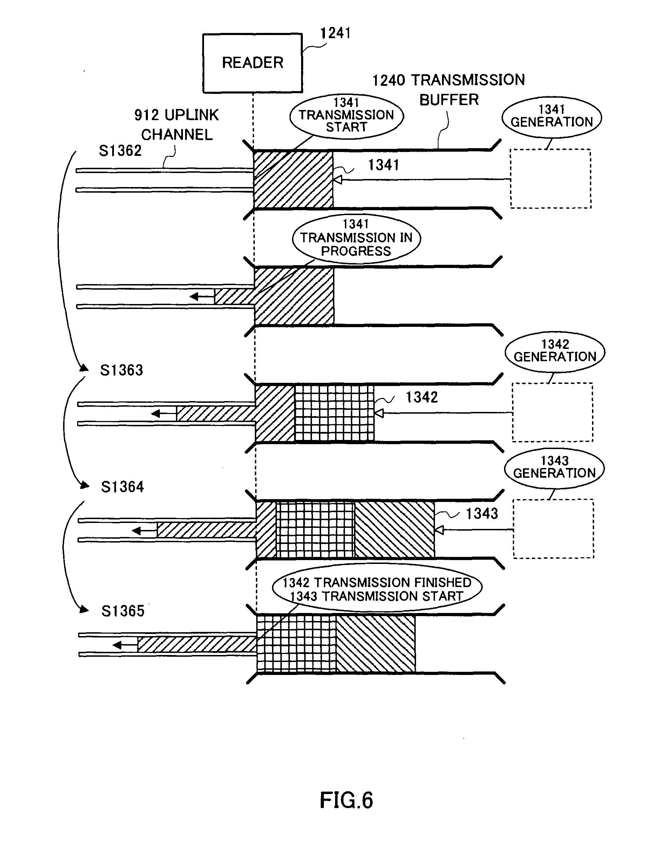

Next, referring to FIG.5 and FIG.6, the steps in packet communication using TCP in the mobile communication system shown in FIG. 1 will be described. FIG. 5 is a sequence diagram showing steps in conventional packet communication and between server 903 and mobile terminal 900 shown in FIG. 1. FIG. 6 illustrates the state of transmission buffer 1240 shown in FIG.4 in the period from step S1362 to step S1365 shown in FIG.5.

For ease of explanation, in FIG. 5, for all data packets, the payload size is 1 [byte] and the transmission window size is 7. The arrows between server 903 and mobile terminal 900 represent packet transmissions and the direction of transmission, and the angle of the arrows represents propagation delay between server 903 and mobile terminal 900.

In FIG. 6, a case is shown where, in the period from step S1362 to step S1365 shown in FIG.5, ACK packets generated by mobile terminal 900 are accumulated in transmission buffer 1240 and are send to uplink channel 912 via reader 1241. The right part of reader 124 represents transmission buffer 1240 and the left part represents uplink channel 912.

In step S1381, server 903 transmits seven data packets (from data packet 801 (SN=1) to data packet 807 (SN=7)) to mobile terminal 900 sequentially, in accordance with the transmission window size 7.

In step 1361, mobile terminal 900 receives first data packet (SN=1) 801 and generates ACK packet 1341 in immediately following step S1362. The period from step S1361 to step S1362 represents the processing delay after the data packet is received until the ACK packet is generated. In the ACK number field of ACK packet 1341, the ACK number AN is set, which is the sequence number SN 2 of the data packet that is expected to be received next.

As shown in FIG. 6, ACKpacket 1341 (AN=2) that is generated is accumulated in transmission buffer 1240. There is nowaiting in transmission buffer 1240, and so reader 1241 immediately starts transmitting ACK packet 1341 to uplink channel 912. Mobile terminal 900 receives next data packet 802 (SN=2) while the transmission of ACK packet 1341 is in progress. In next step S1363, mobile terminal 900 generatesACKpacket 1342 (AN=3) and accumulates it in transmission buffer 1240.

Thereupon, as shown in FIG.6, the transmission of ACK packet (AN=2) 1341 from reader 1241 is still in progress, and so ACK packet 1342 that is generated anew needs to await transmission in transmission buffer 1240.

In next step S1364, again, mobile terminal 900 generates an ACK packet in response to received data packet 1303 (SN=3). However, as shown in FIG. 6, the transmission of ACK packet 1341 (AN=2) is still in progress and so ACK packet 1343 (AN=4) that is newly generated awaits transmission after ACK packet 1342 (AN=3), which previously awaited.

Then, in step S1365, reader 1241 finishes transmitting ACK packet 1341 (AN=2) and at the same time starts transmitting ACK packet 1342 (AN=3) that has been waiting. The interval between step S1362 and S1365 is the time that reader 1241 needs to transmit the ACK packet to uplink channel 912.

The time of propagation delay from step S1365 is necessary before the whole of ACK packet (AN=2) 1341 is received by server 903. In other words, server 903 receives ACKpacket 1341 (AN=2) in step S1382, where the time of propagation delay has passed after step S1365, and, based on this, transmits next data packet 1308 (SN=8).

Reader 1241 finishes transmitting ACK packet 1342 (AN=3) in step S1366 and at the same time starts transmitting ACK packet 1343 (AN=4). This is not shown in FIG.6.

Server 903 receives ACK packet 1342 (AN=3) in step 1383 where the time of propagation delay has passed after step S1366 and based on this transmits next data packet 809 (SN=9).

Hereinafter, every time reader 1241 finishes transmitting an ACK packet, reader 1241 starts transmitting the ACK packet that has been awaiting transmission in transmission buffer 1240. FIG.5 illustrates only the transmission of ACK packet 1343 (AN=4) in step S1367.

Server 903 receives ACK packet 1343 (AN=4) in step S1384, where the time of the propagation delay has passed from step S1367, and, based on this, transmits next datapacket 810 (SN=10) . Hereinafter, likewise, every time server 903 receives an ACK packet, server 903 transmits a new data packet.

Thus, when mobile terminal generates an ACK packet newly, this packet has the then latest reception confirmation information (i.e. sequence number SN). However, this newly generated ACK packet is temporarily stored in transmission buffer 1240 and transmitted after all the ACK packets generated earlier have been transmitted. In other words, as long as ACK packets are stored in transmission buffer 1240, mobile terminal 900 is unable to transmit the latest reception confirmation information (i.e. sequence number SN) to server 903.

On the other hand, when server 903 transmits data packet 807 (SN=7), server 903 will have transmitted data packets of the transmission window size. Thereafter, server 903 receives a new packet, checks the ACK number AN and updates the transmission window by one packet, and transmits a new data packet.

Consequently, after server 903 transmits data packets of the transmission window size, the period in which server 903 is able to transmit data packets is equal to the time mobile terminal 900 requires to transmit one ACK packet, as shown in step 1382, step 1383, and step 1384.

General TCP may utilize delay ACK technique such as disclosed in non-patent document 1, in order to reduce the number of ACK packets to be transmitted.

By using this delay ACK technique, at mobile terminal 900, the average ACK packet generation interval doubles, and server 903 generates an ACK packet every other time it receives a data packet. Every ACK packet that mobile terminal 900 transmits contains reception confirmation information for two data packets.

Consequently, with this delay ACK technique, at mobile terminal 900, the number of ACK packets stored in transmission buffer 1240 decreases to half, and at server 903, the update width of the transmission window in response to reception of one ACK packet becomes two packets. The basic operation is the same as in the communication steps descried earlier with reference to FIG.5 and FIG.6.

However, when packet communication is performed applying TCP to asymmetrical channels, according to the above-described communication steps, the problem arises that, server 903, after having transmitteddatapackets of the transmission window size, is unable to achieve the average transmission TCP throughput above a certain level.

The reason is that server 903 updates the transmission window at intervals between the times that mobile terminal 900 requires to transmit one ACK packet and the update width of the transmission window in response to reception of one ACK packet is constantly one packet. This is because one ACK packet contains reception confirmation information for only one packet.

For example, even if the channel rate of downlink channel 911 is increased in expectation of greater average transmission throughput, the update interval of the transmission window does not change and the update width of the transmission window in response to reception of one ACK packet does not change either. Consequently, the average transmission TCP throughput does not change.

When delay ACK technique is applied to the above packet communication, at server 903, the update width of the transmission window in response to reception of one ACK packet becomes two packets, and therefore the average transmission TCP throughput improves. Still, the update interval of the transmission window does not change from the time required to transmit one ACK packet.

Consequently, using delay ACK technique or increasing the channel rate of downlink channel 911 can improve the average transmission TCP throughput only to a limited degree and the kind of throughput that is expected of the system cannot be achieved.

### Disclosure of Invention

The present invention is directed to solving these problems. It is therefore an object of the present invention to provide a packet communication apparatus that is capable of performing transmission restraint control of ACK packets so that, when the packet communication apparatus performs asymmetrical packet communication with a server, the server achieves average transmission TCP throughput tat is expected of the system.

According to one aspect of the present invention, a packet communication apparatus receives a data packet through a high speed receiving channel and transmits an ACK packet on a low speed transmitting channel on asymmetrical packet channels, and this packet communication apparatus has: a holder that holds a size of the ACK packet that is transmitted and a channel rate of the transmitting channel; a calculator that calculates an ACK packet generation interval based on the size of the ACK packet and the channel rate of the transmission channel; a counter that repeats counting the calculated ACK packet generation interval as one period and outputs an expiration signal every time the one period expires; and a transmitter that, every time the expiration signal is input, generates an ACK packet containing latest reception confirmation information related to data packets received while the expiration signal was being received, and transmits the ACK packet to a transmission stage.

According to another aspect of the present invention, a packet communication apparatus receives a data packet through a high speed receiving channel and transmits an ACK packet on a low speed transmitting channel on asymmetrical packet channels, and this packet communication apparatus has: an accumulator that sequentially accumulates ACK packets generated every time a data packet is received and sequentially transmits to a transmission stage the ACK packets from ones accumulated earlier; and an accumulation controller that, when anACKpacket that is newly generated is accumulated in the accumulator, compares an immediately previous ACK packet that was last accumulated and the new ACK packet to see whether the ACK packets match or do not match, and, when the packets do not match, removes the immediately previous ACK packet and accumulates the new ACK packet, and, when the ACK packets match, additionally accumulates the new ACK packet to the accumulator.

### Brief Description of Drawings

FIG.1 is a block diagram showing a configuration of a mobile communication system for explanation of a conventional packet communication method applying TCP to the asymmetrical communication channel;
FIG.2 shows a TCP packet format;
FIG.3 illustrates window control by the server;
FIG.4 is a block diagram showing a configuration where the mobile terminal shown in FIG. 1 performs conventional packet communication applying TCP to asymmetrical channels;
FIG.5 is a sequence diagram showing communication steps in conventional packet communication between the server and the mobile terminal shown in FIG.1;
FIG.6 explains conditions of the transmission buffer shown in FIG. 12 in the interval between step S1362 to step S1365 shown in FIG.5;
FIG.7 is a block diagrams showing a configuration of a mobile communication system used to explain the packet communication method according to Embodiment 1 of the present invention applying TCP to asymmetrical channels;
FIG.8 is a block diagram showing a configuration where the mobile terminal shown in FIG. 7 performs packet communication according to Embodiment 1 of the present invention applying TCP to asymmetrical channels;
FIG. 9 is a flowchart showing an operation of the operator shown in FIG.8;
FIG. 10 is a sequence diagram explains communication steps in packet communication according to an embodiment of the present invention between the server and the mobile terminal shown in FIG.7;
FIG.11 explains conditions in the transmission buffer shown in FIG.11 in the interval between step S462 and step 464 shown in FIG.10;
FIG.12 is a block diagram showing a configuration of a mobile communication system used to explain the packet communication method according to Embodiment 2 of the present invention applying TCP to asymmetrical channels;
FIG.13 is a block diagram showing a configuration where the mobile terminal shown in FIG.12 performs packet communication according to Embodiment 2 of the present invention applying TCP to asymmetrical channels; and
FIG. 14 is a flow chart showing an operation of the writer shown in FIG.13.

### Best Mode for Carrying Out the Invention

Now, embodiments of the present invention will be described below in detail with reference to the accompanying drawings. However, the present invention is by no means limited to these embodiments and can be made in various other forms without departing from the scope of the invention.

A gist of the present invention is, when a communication terminal performs asymmetrical packet communication with a server, to allow the communication terminal restrain ACK packet transmissions using the following methods (1) - (3) so that the server is able to achieve average transmission TCP throughput expected of the system.
(1) The communication terminal: calculates an ACK packet generation interval based on the size of an ACK packet to be transmitted on a transmission channel and the channel rate of the transmission channel; does not respond to data packets received during the period of the ACK packet generation interval calculated; generates, every time the period of the ACK packet generation interval expires, an ACK packet containing latest reception confirmation information; and sends the ACK packet to a transmission buffer provided in the ACK packet transmission stage. In the transmission buffer, the ACK packet is read without waiting and transmitted on the transmission channel.
(2) The communication terminal: has anACKpacket transmission buffer in the ACK packet generation stage for storing ACK packets generated every time a data packet is received; compares the ACK numbers of ACK packets awaiting transmission in this ACK packet transmission buffer and the ACK number of the ACK packet that is generated anew; removes the waiting ACK packets according to certain rules; and sends the new ACK packet from the ACK packet transmission buffer to a transmission buffer provided in the ACK packet transmission system.
(3) The communication terminal has a counter that counts the number of ACK packet transmissions in (1) and (2); compares the ACK number of an newly generated ACK packet and the ACK number of the previous ACK packet; according to the result of comparison, resets the counter when the ACK numbers do not match and updates the counter when the ACK numbers match; counts the number of times ACK packets having the same ACK packet number continue; and, if the count is above the predetermined value, discards the newly generated ACK packet. By this means, redundantACK packet generation and transmission are restrained in situation where transmission error occurs frequently.

Now, embodiments of the present invention will be described below in detail with reference to the accompanying drawings.

### (Embodiment 1)

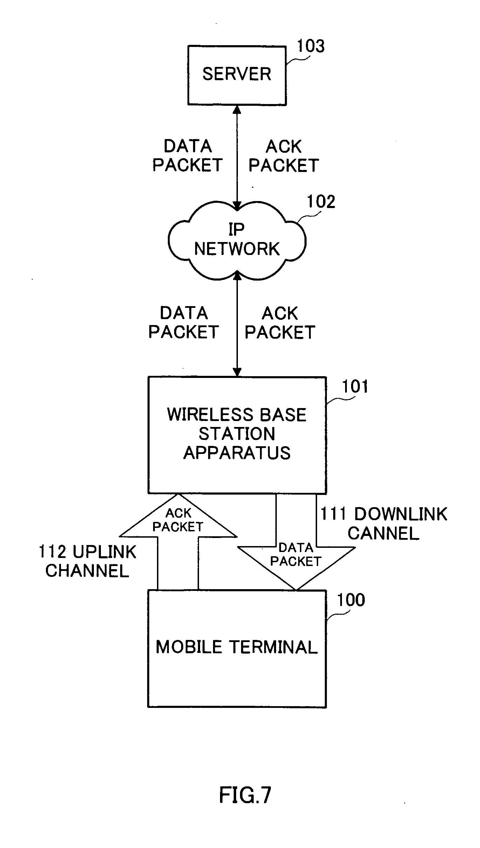

FIG.7 is a block diagram showing a configuration of a mobile communication system used to explain the packet communication method according to Embodiment 1 of the present invention that applies TCP to asymmetrical channels.

In this mobile communication system, as shown in FIG.7, mobile terminal 100 is connected to network (IP network) 102 that transfers packets using the Internet protocol (IP) via wireless base station apparatus 101. Server 103 is present in network (IP network) 102 and performs packet communication with mobile terminal 100 applying TCP to asymmetrical channels.

In other words, mobile terminal 100 receives a data packet transmitted from server 103 to IP network 102 via wireless base station apparatus 101, and returns an ACK packet to server 103 via wireless base station apparatus 101 and IP network 102. However, the channel rate of downlink channel 111 whereby mobile terminal 100 receives the data packet is greater than the channel rate of uplink channel 112 whereby mobile terminal 100 returns the ACK packet.

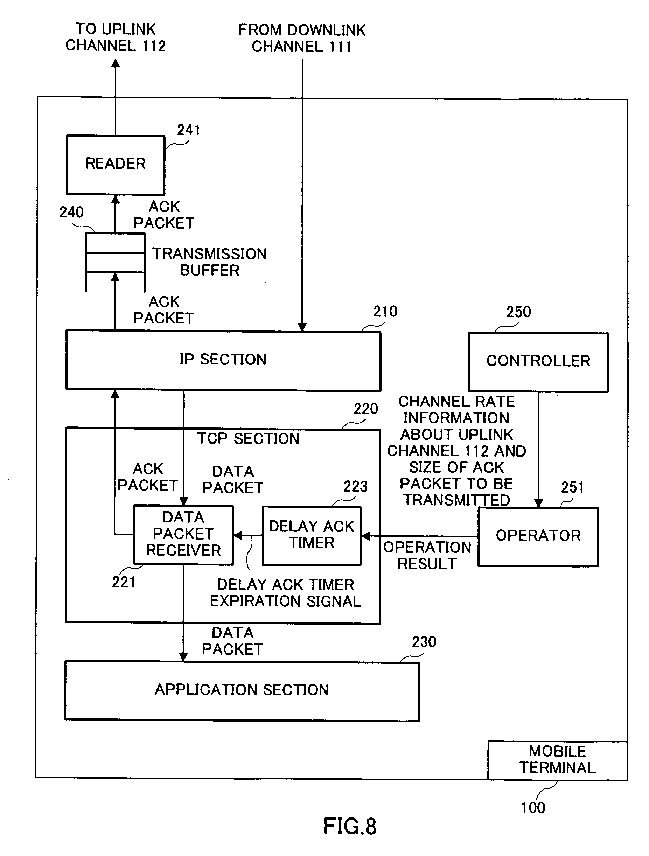

FIG. 8 is a block diagram showing the configuration where mobile terminal 100 shown in FIG.7 performs the packet communication according to Embodiment 1 applying TCP to asymmetrical channels. As shown in FIG. 8, mobile terminal 100 shown in FIG. 7 has IP section 210, TCP section 220, application section 230, transmission buffer 240, reader 241, controller 250 and operator 251. TCP section 220 has data packet receiver 221, delay ACK timer section 223.

IP section 210 applies IP processing to an IP packet received via downlink channel 111 and transmits the result to data packet receiver 221 . In addition, IP section 210 attaches a IP header to an ACK packet received from data packet receiver 221 and transmits the result to transmission buffer 240.

Transmission buffer 240 accumulates the ACK packets received from IP section 210. Reader 241 reads ACK packets from transmission buffer 240 according to the channel rate of uplink channel 112 and transmits ACK packets to uplink channel 112.

Controller 250 holds the channel rate of uplink channel 112 (ru [bit/sec]) and the size of theACKpacket to be transmitted (SA[byte]), and transmits them to operator 251.

Operator 251 receives from controller 250 the channel rate of uplink channel 112 and the size of the ACK packet to be transmitted, calculates 8*SA/ru[sec], which is the transmission interval of one ACK packet at reader 241, and transmits the calculation result to delay ACK timer 223.

Delay ACK timer 223 sets the calculation result received from operator 251 as the timer period for the ACK packet generation interval, and, very time delay ACK timer 223 counts the ACK packet generation interval, sends a delay ACK timer expiration notice to data packet receiver 221 and restarts the timer.

Data packet receiver 221 transmits the data packet received from IP section 210 and sends the data packet to application section 230, which is an application layer for processing user packets. Thereupon data packet receiver 221 does not generate an ACK packet every time receiving one data packet. Instead, data packet receiver 221 generates an ACK packet every time receiving a delay ACK timer expiration notice from delay ACK timer 223.

Here, data packet receiver 221 receives at least one data packet and thereafter receives a delay ACK timer expiration notice from delay ACK timer 223. Upon receiving a delay ACK timer expiration notice, data packet receiver 221 generates an ACK packet having the next sequence number SN of the sequence number SN of the data packet received immediately before as its ACK number AN, and sends the ACK packet to IP section 210. By this means, the amount of ACK packet transmissions is restrained.

In addition, data packet receiver 221 not only applies TCP processing to the data packet received from IP section 210 and sends the result to application section 230, but also monitors the presence and absence of loss by watching the sequence number of received data packets. Upon detecting a data packet loss, data packet receiver 221 transmits an ACK packet to IP section 210 immediately after the detection of the loss.

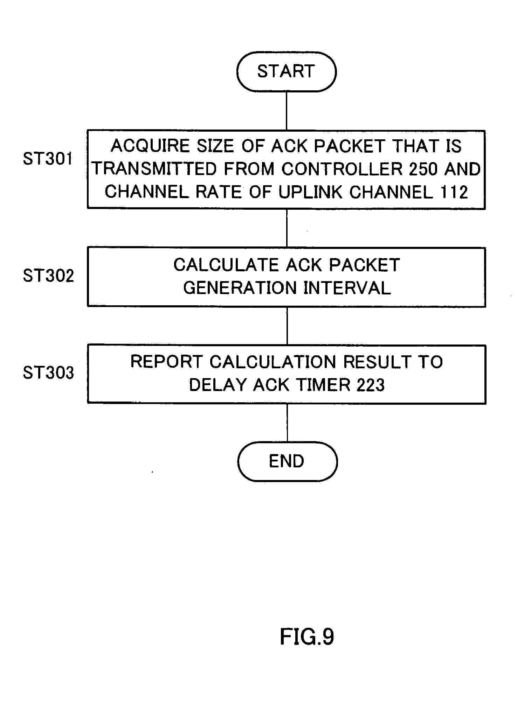

FIG.9 is a flow chart showing an operation of operator 251 shown in FIG. 8. In FIG.9, operator 251: acquires the size of the ACK packet to be transmitted and the channel rate of uplink channel 112 from controller 250 (step ST301) ; calculates the ACK packet generation interval 8*SA/ru [sec] such that ACK packets do not accumulate in transmission buffer 240 (step ST301); and reports the calculated ACK packet generation interval to delay ACK timer 223 (step ST302). By this means, the ACK packet generation interval calculated in operator 251 is set as the period of delay ACK timer 223.

Incidentally, operator 251 may determine the ACK packet generation interval that is set as the timer period of delay ACK timer 223 by the following method. That is, where the ACK packet bandwidth occupation ratio α defines the ratio between the desired averageACKpacket transmission rate and the channel rate of uplink channel 112, operator 251 may multiply the above calculationresult (8*SA/ru[sec]) by α and send this calculation result (8*α*SA/ru[sec]) to delay ACK timer 223.

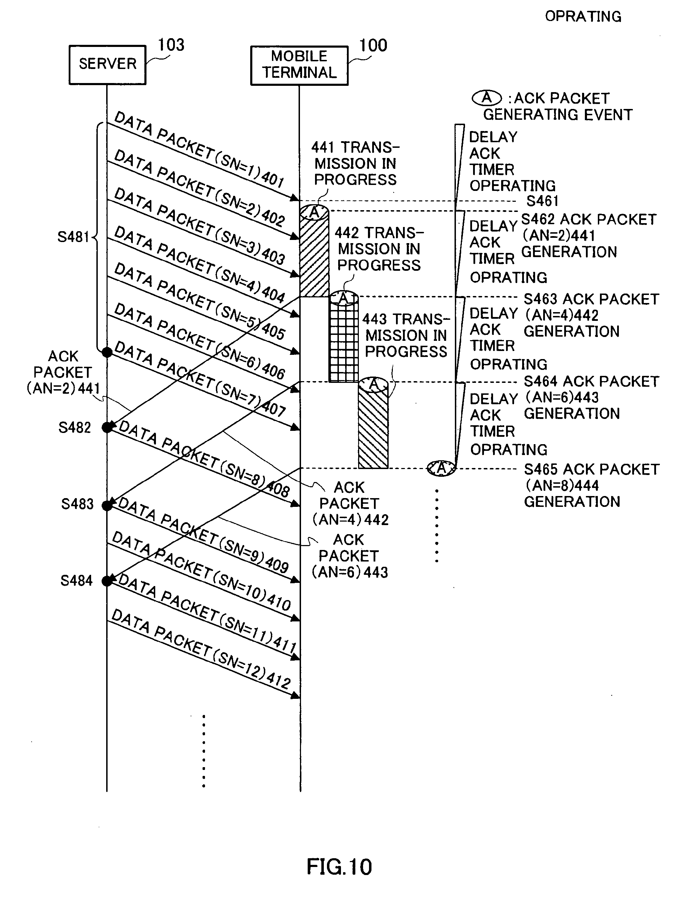

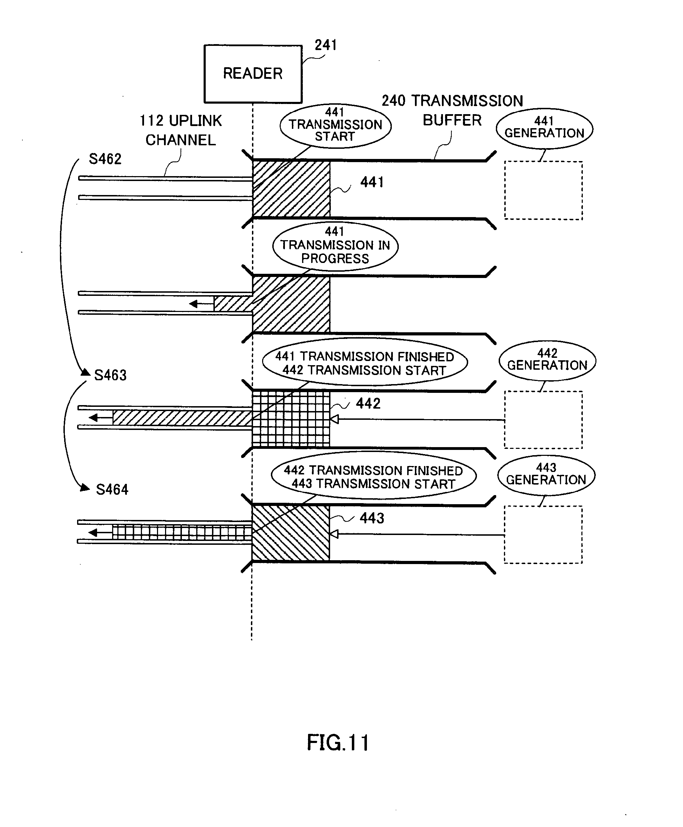

Next, communication steps in case packet communication is performed using TCP in the mobile communication system shown in FIG.7 with reference to FIG.10 and FIG.11. FIG.10 is a sequence diagram explaining communication steps in packet communication between server 103 and mobile terminal 100 shown in FIG. 7 according to the present embodiment. FIG.11 explains conditions in transmission buffer 240 in the period between step S462 and step S464 shown in FIG.10.

Here, for ease of explanation in FIG.10, for all data packets, thepayloadsize is 1 [byte] and the transmission window size is 7. In addition, the time required to transmit one ACK packet is the period of the delay ACK timer. Incidentally, the arrows between server 103 and mobile terminal 100 represent packet transmissions and the direction of transmission, and the angle of the arrows represents propagation delay between server 103 and mobile terminal 100.

In addition, FIG.11 shows, in the period between step S462 and step S464 shown in FIG.10, ACK packets generated by mobile terminal 100 are accumulated in transmission buffer 240 and are transmitted to uplink channel 112 via reader 241. Incidentally, the right part of reader 124 represents transmission buffer 240 and the left part represents uplink channel 112.

Referring to FIG.10, the period from step S462 to step S463, shown as "DELAY ACK TIMER OPERATING," the period from step S463 and step S464, the period from step S464 and S465, and others are the period of delay ACK timer 223 and are set as the timer required to transmit oneACKpacket. TheACKpacket generation operation executed when the period of delay ACK timer 223 expires, and not at other times. Consequently, packet communication is performed between server 103 and mobile terminal 100 as follows:

In step S481, server 103 sequentially transmits to mobile terminal 100 seven data packets, namely data packet 401 (SN=1) through data packet 407 (SN=7), in accordance with the transmission window size "7."

In step S461, mobile terminal 100 receives first data packet 401 (SN=1). In following step S462, delay ACK timer 223 expires the first time. From this, ACK packet 441 is generated. In ACK packet 441, the ACK number AN is set with the sequence number SN "2," which is the sequence number SN of the data packet that is expected to be received next. Generated ACK packet441 (AN=2) is accumulated in transmission buffer 240 as shown in FIG.11. There is no waiting in transmission buffer 240, and reader 241 immediately starts transmission to uplink channel 112.

At the same time, in step S462, delayACK timer 223 restarts and counts towards step S4 63 where it expires next time. During the period from S462 to step S463 in which delay ACK timer 223 is operating, the transmission of ACK packet 441 (AN=2) is in progress. Data packet 402 (SN=2) and data packet 403 (SN=3) are received during this period, but no ACK packet is generated.

In step S463 where delay ACK timer 223 expires, the transmission of ACK packet 441 (AN=2) is finished. The time of propagation delay from step S463 is required until the whole of ACK packet 441 (AN=2) is received by server 103. That is, server 103 receives ACK packet 441 (AN=2) in step S482 where the time of propagation delay has passed from step S463. This is after seven data packets of the transmission window have been transmitted, and so server 103 shifts to transmission operation while updating the transmission window.

In step S482, server 103 recognizes the reception of one packet, that is, first data packet 401 (SN=1) from the ACK number AN of ACK packet 441 (AN=2), updates the transmission window by one packet, and transmits next data packet 408 (SN=8).

Mobile terminal 100 generates an ACK packet in step 5463, in which delay ACK timer 223 expires. However, mobile terminal 100 has already received more than one data packet and so generates ACKpacket 442 (AN=4), which is expected to be received next from the next data packet (SN=4) after data packet 403 (SN=3) received immediately before delayACK timer 223 expired, and accumulates ACK packet 442 in transmission buffer 240.

However, by then, the transmission of ACKpacket 441 (AN=2) read earlier by reader 241 has been finished. Consequently, with this packet 442 (AN=4), there is no waiting in transmission buffer 240 and the transmission to uplink channel 112 starts immediately by reader 241 in step S463.

At the same time, in step S463, delayACK timer 223 restarts and counts towards step S4 64 where it expires next time. During the period from S463 to step S464 in which delay ACK timer 223 is operating, the transmission of ACK packet 442 (AN=4) is in progress. Data packet 404 (SN=4) and data packet 405 (SN=5) are received during this period, but no ACK packet is generated.

In step S464 where delay ACK timer 223 expires, the transmission of ACK packet 442 (AN=4) is finished. The time of propagation delay from step S464 is required until the whole of ACK packet 442 (AN=4) is received by server 103. That is, server 103 receives ACK packet 442 (AN=4) in step S483 where the time of propagation delay has passed from step S464.

In this case, AN=4 and server 103 recognizes the reception of two packets, namely data packet 402 (SN=2) and data packet 403 (SN=3), updates the transmission window by two packets, and sequentially transmits two data packets 409 (SN=9) and 410 (SN=10).

Mobile terminal 100 generates an ACK packet in step S464, in which delayACK timer 223 expires. However, mobile terminal 100 has already received more than one data packet and so generates ACKpacket 443 (AN=6), which is expected to be received next from the next data packet (SN=6) after data packet 403 (SN=5) received immediately before delayACK timer 223 expired, and accumulates ACK packet 443 in transmission buffer 240.

However, by then, the transmission of ACK packet 442 (AN=4) read earlier by reader 241 has been finished. Consequently, with this ACK packet 443 (AN=6), there is no waiting in transmission buffer 240 and the transmission to uplink channel 112 starts immediately by reader 241 in step S464.

At the same time, in step S464, delayACK timer 223 restarts and counts towards step S4 65 where it expires next time. During the period from S464 to step S465 in which delay ACK timer 223 is operating, the transmission of ACK packet 443 (AN=6) is in progress. Data packet 406 (SN=6) and data packet 407 (SN=7) are received during this period, but no ACK packet is generated.

In step S465 where delay ACK timer 223 expires, the transmission of ACK packet 443 (AN=6) is finished. The time of propagation delay from step S465 is required until the whole of ACK packet 443 (AN=6) is received by server 103. That is, server 103 receives ACK packet 443 (AN=6) in step S484 where the time of propagation delay has passed from step S465.

In this case, AN=6 and server 103 recognizes the reception of two packets, namely data packet 404 (SN=4) and data packet 405 (SN=5), updates the transmission window by two packets, and sequentially transmits two data packets 411 (SN=11) and 412 (SN=12). Thereafter the same operations will repeat between mobile terminal 100 and server 103.

According to Embodiment 1 of the present invention, thus, mobile terminal 100 determines the ACK packet generation interval based on the time required to transmit one ACK packet, generates a new ACK packet at the timing the transmission of the immediately previous ACK packet to uplink channel 112 is finished and starts transmitting the new ACK packet to uplink channel 112, so that the accumulation of ACK packets in transmission buffer 240 is restrained.

When mobile terminal 100 generates an ACK packet, mobile terminal 100 contains the then latest reception confirmation information in theACKpacket, so that the transmission to uplink channel 112 can be started immediately and the time required to report the latest reception confirmation information to server 103 can be shortened substantially compared to prior art.

Thereupon server 103 receives an ACK packet at intervals between the times that mobile terminal 100 requires to transmit oneACKpacket and updates the transmission window in accordance with the reception confirmation information contained in the ACK packet. According to Embodiment 1, thus, the update width of the transmission window in response to reception of one ACK packet can be increased.

For example, if the channel rate of downlink channel 911 is increased in expectation of greater average transmission throughput, the number of data packets received at mobile terminal 100 while delay ACK timer is operating increases, and, in accordance with this, more reception confirmation information is contained in one ACK packet. As a result, the transmission window update width by server 103 in response to reception of one ACK packet increases, so that the average transmission TCP throughput expected of the system can be achieved.

### (Embodiment 2)

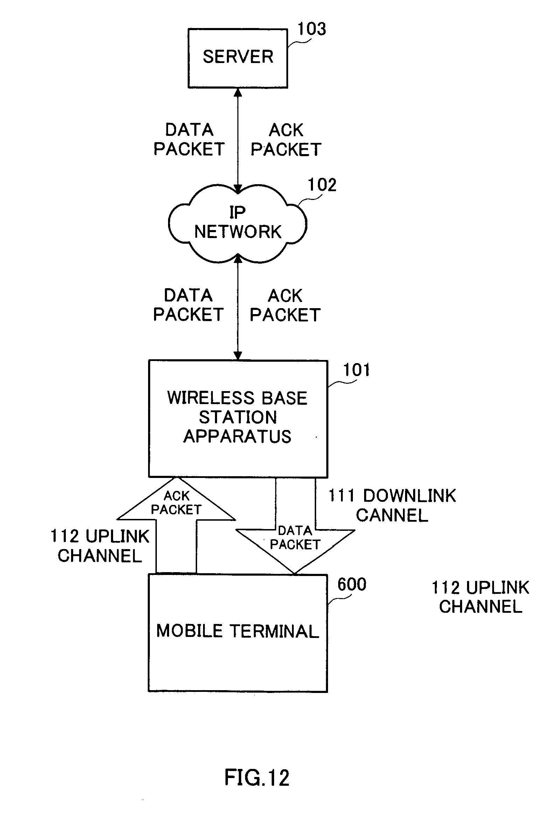

FIG.12 is a block diagram showing a configuration of a mobile communication system used to explain the packet communication method according to Embodiment 2 of the present invention applying TCP to asymmetrical channels. Parts in FIG.12 that are equivalent or identical to ones in the configuration shown in FIG. 7 will be assigned the same reference numerals. The following explanation will focus on parts specifically related to Embodiment 2.

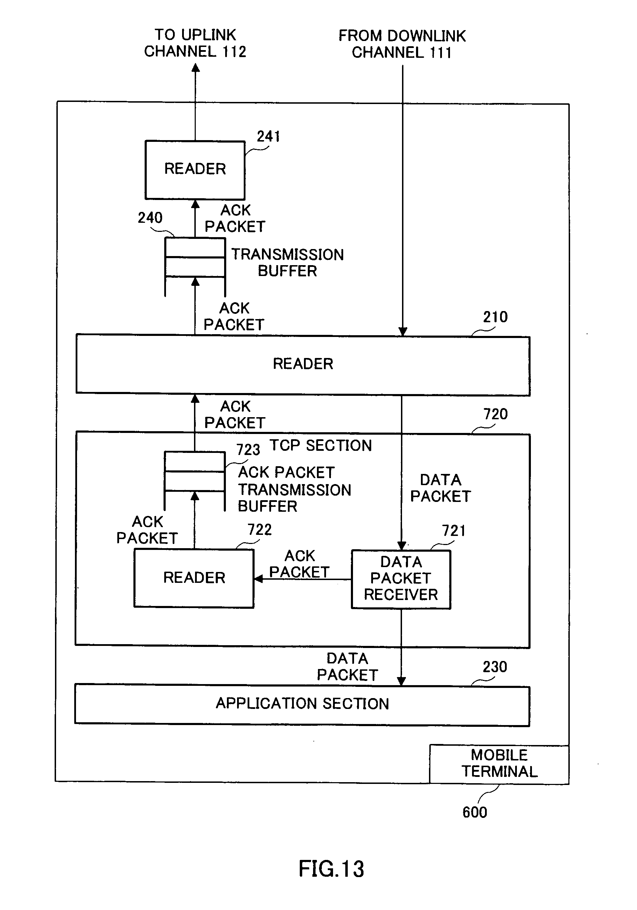

The mobile communication system shown in FIG.1 provides mobile terminal 600 instead of mobile terminal 100 to the configuration shown in FIG.7. This mobile terminal 600 is configured as shown in FIG.13.

FIG.13 is a block diagram showing the configuration whereby the mobile terminal shown in FIG. 12 executes the packet communication according to Embodiment 2 applying TCP to asymmetrical channels. Parts in FIG.13 that are equivalent or identical to ones in the configuration shown in FIG.8 will be assigned the same reference numerals. The following explanation will focus on parts specifically related to Embodiment 2.

Mobile terminal 600 shown in FIG.13 removes controller 250 and operator 251 from the configuration shown in FIG. 8 and provides TCP section 720 instead of TCP section 220. TCP section 720 has data packet receiver 721, writer 722, and ACK packet transmission buffer 723.

Data packet receiver 721 applies TCP processing to a data packet received from IP section 210 and sends the result to application section 230, and, every time receiving a data packet, generates an ACK packet in which the ACK number AN is set, and sends the ACK packet to writer 722.

Writer 722 writes the ACK packet, newly generated and received from data packet receiver 721, in ACK packet transmission buffer 723. In this writing processing, writer 722 compares the ACK number AN between the newly generated ACK packet and the immediately previous ACK packet (the ACK packet written last in transmission buffer 723).

When the result of the comparison shows an unmatch, it is possible that the newly generated ACK packet implicitly contains the reception confirmation information that is contained in the immediately previous ACK packet, and so writer 722 remove the immediately previous ACK packet from ACK packet transmission buffer 723 and writes the newly generated ACK packet in ACK packet transmission buffer 723.

In this case, for example, the ACK number AN of the immediately previous ACK packet is 10 and the ACK number AN of the newly generatedACKpacket is 20, the immediately previous ACK packet contains reception confirmation information to the effect that mobile terminal 600 has received data packets with sequencenumbersSNlessthan9. Meanwhile, the newly generated ACK packet contains reception confirmation information to the effect that mobile terminal 600 received data packets with sequence numbers SN less than 19. That is, the newly generated ACK packet implicitly contains reception confirmation information that is contained in the immediately previous ACK packet. The immediately previous ACK packet is therefore removed.

On the other hand, when the result of the comparison shows a match, it is possible that the newly generated ACK packet is a redundant ACK packet having the same ACK number with the immediately previous ACK packet, and so writer 722 writes the newly generated ACK packet in transmission buffer 723.

The ACK packet written in ACK packet transmission buffer 723 is read fromACK packet transmission buffer 723 in the order it was written in and sent to IP section 210.

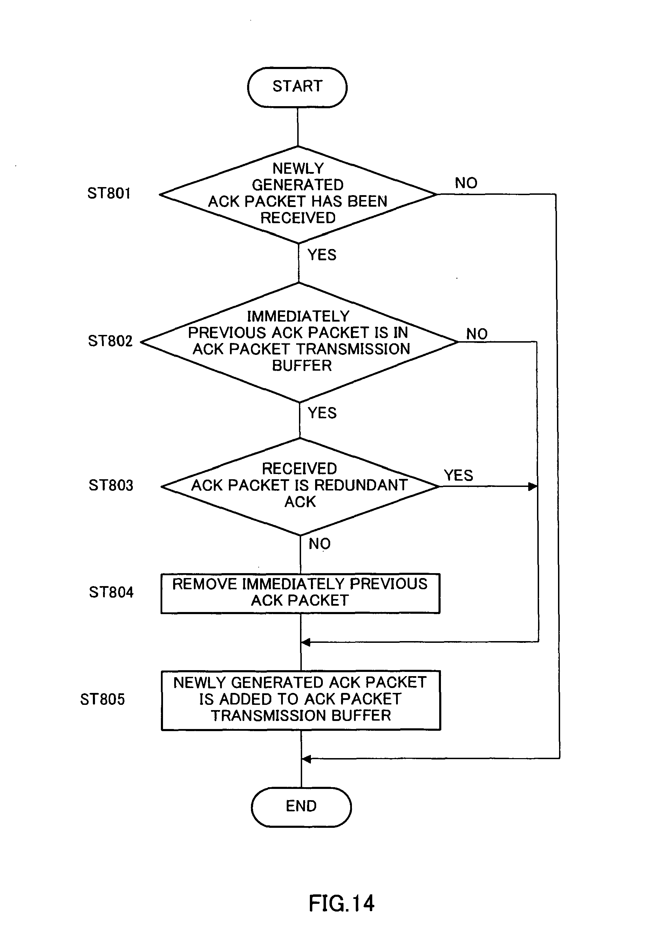

Next, the operation of writer 722 will be explained below with reference to FIG.14. FIG.14 is a flowchart showing an operation of the writer shown in FIG.12. In FIG.14, writer 722 determines whether or not a newly generated ACK packet has been received from data packet receiver 721 (step ST801) . If the determination result shows that the ACK packet has not been received (step ST801: No), the process will be terminated. If the ACK packet has been received (step ST801: Yes), the process proceeds to step ST802 and a determination is made whether or not the immediately previous ACK packet is present in ACK packet transmission buffer 723.

If the result of the comparison in step ST802 shows that the immediately previous ACK packet is not present in ACK packet transmission buffer 723 (step ST802: No), the process proceeds to step ST805. If the immediately previous ACK packet is present in ACK packet transmission buffer 723 (step ST802: Yes), the process proceeds to step ST803.

Step ST803 compares the ACK number AN between the newly generated ACK packet and the immediately previous ACK packet and determines whether or not the ACK numbers AN match. That is, step ST803 determines whether or not the newly generated ACK packet is a redundant packet. As a result of this determination, if the newly generated ACK packet is a redundant ACK packet (step ST803 : Yes), the process proceeds to step ST805. If the newly generated ACK packet is not a redundant ACK packet (step ST803: No), the process proceeds to step ST804.

Step ST804 removes the immediately previous ACK packet that is present in ACK packet transmission buffer 723 and proceeds to step ST805. Step ST805 writes the newly generated ACK packet in ACK packet transmission buffer 723 and concludes the processing.

The packet communication steps according to Embodiment 2 are basically the same as the packet communication steps according to Embodiment 1 shown in FIG.10 and will not be explained here. Only the trigger for ACK packet generation changes. In both cases, it is possible to contain the latest information in a transmitting ACK packet.

According to Embodiment 2, thus, ACK packet transmission buffer 723 provided in the TCP section of mobile terminal 600 writes a new ACK packet over an old ACK packet, so that there is only an ACK packet that contains the latest reception confirmation information. When the transmission of an ACK packet is finished, reader 741 receives the ACK packet from ACK packet transmission buffer 723 and starts transmitting the ACK packet to uplink channel 112, so that the latest reception confirmation information can be reported to server 103.

Server 103 receives one packet at time intervals between the times mobile terminal 600 requires transmit to oneACKpacket, and updates the transmission window in accordance with the reception conformation information contained in the ACKpacket. Consequently, if, for example, the channel rate of downlink channel 111 is increased in expectation of greater average transmission throughput, the number of ACKpackets to be written in the ACK packet transmission buffer increases. However, the ACK packets other than the one written in last are discarded and the ACK packet written in last contains more reception confirmation information. As a result, the transmission window update width by server 103 in response to reception of one ACK packet increases, so that the average transmission TCP throughput expected of the system can be achieved.

If, inmobile terminals 100 and 600, data packet receivers 221 and 721 detect a data packet loss, several redundant packets having the same ACK number AN with the immediately previous ACK packet are generated. In this case, according to the TCP algorithm, in order for server 103 to detect congestion by receiving redundant ACK packets, three consecutive redundant ACK packets may be sufficient.

So, data packet receivers 221 and 721 have a counter that counts the number of ACK packet transmissions, compares the ACK number between a newly generated ACK packet and the immediately previous ACK packet, resets the counter when the result of the comparison shows an unmatch and updates the counter when the result of the comparison shows a match, thereby counting how many ACK packets having the same number continue. Incidentally, if the count value exceeds a predetermined threshold, the newly generated ACK packet may be discarded.

By this means, when a data packet loss is detected and N (N>3) or more redundant ACK packets are generated consecutively, redundantACKpackets after the Nth are discarded without being transmitted to IP section 210, so that redundant ACK packet generations and transmissions performed in situations prone to transmission errors can be restrained and irrelevant ACK packet transmissions can be further restrained.

The hardware configuration of mobile terminals 100 and 600 is arbitrary and is by no means limited. For example, mobile terminals 100 and 600 may be implemented by means of a computer having a CPU and a memory device (ROM, RAM, hard disc, and other memory mediums). If mobile terminals 100 and 600 are implemented by means of a computer, a CPU executes a program in which the operations of mobile terminals 100 and 600 are programmed and mobile terminals 100 and 600 perform predetermined operations.

The present application is based on Japanese Patent Application No.2003-163214, the entire content of which,is expressly incorporated herein by reference.

### Industrial Applicability

Control can be performed that restrains ACK packet transmission, so that the average transmission TCP throughput expected of the system can be obtained at the server.

## Claims

1. A packet communication apparatus that receives a data packet through a high speed receiving channel and transmits anACK packet on a low speed transmitting channel on asymmetrical packet channels, said packet communication apparatus comprising:
a holder that holds a size of the ACK packet that is transmitted and a channel rate of the transmitting channel;
a calculator that calculates an ACK packet generation interval based on the size of the ACK packet and the channel rate of the transmission channel;
a counter that repeats counting the calculated ACK packet generation interval as one period and outputs an expiration signal every time the one period expires; and
a transmitter that, every time the expiration signal is input, generates an ACK packet containing latest reception confirmation information related to data packets receivedwhile the expiration signal was being received, and transmits the ACK packet to a transmission stage.

2. A packet communication apparatus that receives a data packet through a high speed receiving channel and transmits anACKpacket on a low speed transmitting channel on asymmetrical packet channels, said packet communication apparatus comprising:
an accumulator that sequentially accumulates ACK packets generated every time a data packet is received and sequentially transmits to a transmission stage the ACK packets from ones accumulated earlier; and
an accumulation controller that, when an ACK packet that is newly generated is accumulated in said accumulator, compares an immediately previous ACK packet that was last accumulated and the new ACK packet to see whether the ACK packets match or do not match, and, when the packets do not match, removes the immediately previous ACK packet and accumulates the new ACK packet, and, when the ACK packets match, additionally accumulates the new ACK packet to the accumulator.

3. The packet communication apparatus according to claim 1, further comprising:
a counter that counts the number of times ACK packets are transmitted;
an updater that compares a newly generated and an ACK packet that was generated immediately before, and that resets the counter when the ACK packets do not match and updates the counter when the ACK packets match; and
a section that discards the newly generated ACK packet when the count value on the counter exceeds a set value.

4. The packet communication apparatus according to claim 2, further comprising:
a counter that counts the number of times ACK packets are transmitted;
an updater that compares a newly generated and an ACK packet that was generated immediately before, and that resets the counter when the ACK packets do not match and updates the counter when the ACK packets match; and
a section that discards the newly generated ACK packet when the count value on the counter exceeds a set value.
